# EUROPEAN PATENT APPLICATION

(11) **EP 2 886 405 A1**
(43) Date of publication of application: **24.06.2015**
(21) Application number: 14199517.5
(22) Date of filing: 19.12.2014
(51) Int. Cl.: B60T 7/08, B60T 7/10

(54) **Hand brake lever with electrically-operated ratchet mechanism**

(30) Priority: 19.12.2013 IT TO20131046
(71) Applicant: Fiat Group Automobiles S.p.A., 10135 Torino (TO) (IT)
(72) Inventor: Rizzini, Nicola, 10135 Torino (IT); Mariuzzo, Paolo, 10135 Torino (IT)
(74) Representative: Bergadano, Mirko

(57) **Abstract**

The present invention concerns a hand-operable device (1) for controlling a parking brake of a motor vehicle, said device (1) including: a lever (2) that is hand operable to control the parking brake and carries finger-operable control means (5); and a ratchet mechanism (6) that is coupled with the lever (2) and configured to constrain movement of said lever (2), said ratchet mechanism (6) comprising a sector gear (7) and a catch (8) configured to engage said sector gear (7), thereby constraining movement of the lever (2). The device (1) according to the present invention is characterized by further including an electric actuator (9) that is: connected to the control means (5) for being controlled by the latter; and configured to cause, in response to operation of the control means (5), disengagement of the catch (8) from the sector gear (7), thereby removing the constraint imposed by the ratchet mechanism (6) on the movement of the lever (2).

## Description

### TECHNICAL FIELD OF INVENTION

The present invention relates, in general, to an automotive parking brake (or hand brake) and, in particular, to a hand-operable device for controlling a parking brake of a motor vehicle. Specifically, the present invention concerns a hand brake lever with an electrically-operated ratchet mechanism.

### STATE OF THE ART

As is known, the parking brake of a motor vehicle is normally controlled by means of a device that is hand operable by the driver and which is located in the interior of the motor vehicle at, or close to, the position occupied, in use, by the driver (for example, at the side of the seat destined to be occupied, in use, by the driver) so as be easily reachable and therefore operable by the driver.

In general, a device for controlling the parking brake of a motor vehicle comprises a lever (hereinafter also referred to as a hand brake lever) that is hand operable by the driver and is rotatably mounted, in particular pivoted at one end, on a support (for example a support bracket) fastened, or anchored, to the body of the motor vehicle (for example, on the interior floor of the motor vehicle) in such a way that said lever can turn about a respective axis between a rest position, in which the hand brake is not operated, and an active position in which the hand brake is operated.

Traditionally, holding the hand brake lever in the active position and consequently maintaining operation of the parking brake is guaranteed by means of a ratchet mechanism, in particular by using a ratchet mechanism that typically includes:
- a sector gear located on the support fastened to the body of the motor vehicle (for example, made on the support bracket); and
- a catch, that
   - is rotatably mounted, or rather pivoted, on the hand brake lever so as be able to turn about a respective axis parallel to the axis of rotation of the hand brake lever,
   - is coupled at a first end to a control rod that is arranged inside the hand brake lever and movable with substantially rectilinear motion inside said lever, and
   - comprises, at a second end, a pawl configured to engage the sector gear.

In addition, the hand brake lever generally comprises, at a second end, a handgrip portion on which a control button is provided that is connected to the aforementioned control rod by a spring.

In use, when the control button is not pressed, the catch engages the sector gear, thereby allowing rotation of the hand brake lever from the rest position to the active position whilst preventing rotation in the opposite direction.

Instead, when the control button is pressed, the spring, in response to the push of the control button, exerts a force on the control rod thereby causing the latter to move, and said control rod, by moving, rotates the catch, causing its disengagement, or release, from the sector gear, thereby enabling rotation of the hand brake lever from the active position to the rest position and also rotation in the opposite direction.

Thus, in view of the foregoing, disengagement of the ratchet mechanism in current mechanical parking brakes for motor vehicles is implemented through a series of mechanical components that mechanically transmit the release command from the control button located on the handgrip of the hand brake lever to the catch.

In particular, for correct operation of the ratchet mechanism and, therefore, of the device for controlling the parking brake, direct transmission of the release command from the control button located on the handgrip of the hand brake lever to the catch is necessary, without loss of efficiency.

The use of control rods and mechanical linkages for transmission of the release command from the control button to the ratchet mechanism constrains the shape of the hand brake lever as it imposes the presence of straight sections in which the control rods are free to slide and sufficiently large spaces to allow free rotation of the mechanical components in cases where changes in the direction of the forces are necessary (for example, from longitudinal to transverse). This constraint conflicts with current style and product requirements, which instead increasingly need the possibility of exploiting space for adding content required by the market (for example for glove compartments, beverage holders, etc.).

Examples of known types of automotive parking brakes are provided in DE 32 10 402 A1, DE 10 2006 016 497 A1 and DE 297 15 076 U1.

In particular, DE 32 10 402 A1 describes an automotive parking brake comprising:
- a hand brake lever that carries a push-button;
- a ratchet mechanism that includes a catch and a sector gear and which enables rotation of the hand brake lever only in the direction that allows activation of the parking brake, while the push-button located on the hand brake lever must be pressed for deactivation of the parking brake, this push-button causing disengagement of the catch from the sector gear, thereby freeing the hand brake lever and therefore allowing it to rotate in the other direction; and
- a servo-assisted device to pull the hand brake lever (i.e. to help the driver to rotate the hand brake lever in the direction that allows activation of the parking brake).

In detail, said servo-assisted device comprises an electric motor that, when the push-button located on the hand brake lever is pressed, turns a pulley which pulls the hand brake cable, thereby assisting the driver's effort.

In any case, according to DE 32 10 402 A1, the release of the ratchet mechanism functions exactly as previously described, i.e. the release command is mechanically transmitted by the push-button to the catch, for example through the use of control rods and mechanical linkages.

Furthermore, DE 10 2006 016 497 A1 describes a system for operating an automotive parking brake. In particular, said system comprises control means (for example a push-button) located so as to be easily operated by the driver (for example, located on the dashboard) and a ratchet mechanism that, in response to commands received from the control means, activates and deactivates the parking brake and which is located in a different position from that of the control means (for example, on the rear axle shaft, in the engine compartment, under the seats, etc.).

Finally, DE 297 15 076 U1 describes a device for controlling a parking brake pedal of a motor vehicle, in which the brake pedal is operated by lever located in the gearbox zone.

### OBJECT AND SUMMARY OF THE INVENTION

Object of the present invention is thence that of providing a solution to the above-stated technical problems, namely a solution that enables obviating the constraint imposed on the shape of the hand brake lever by the use of control rods and mechanical linkages for transmission of the release command from the control button to the ratchet mechanism.

The above-stated object is achieved by the present invention in that it relates to a hand-operable device for controlling the parking brake of a motor vehicle, as defined in the appended claims.

In particular, the present invention concerns a hand-operable device for controlling a parking brake of a motor vehicle, which device includes:
- a lever that is hand operable to control the parking brake and carries finger-operable control means; and
- a ratchet mechanism that is coupled to the lever and configured to constrain movement of said lever, said ratchet mechanism comprising a sector gear and a catch configured to engage said sector gear thereby constraining the movement of the lever.

The device according to the present invention is characterized by further including an electric actuator that is:
- connected to the control means to be controlled by the latter; and
- configured to cause disengagement of the catch from the sector gear in response to operation of the control means, thereby removing the constraint imposed by the ratchet mechanism on the movement of the lever.

### BRIEF DESCRIPTION OF THE DRAWINGS

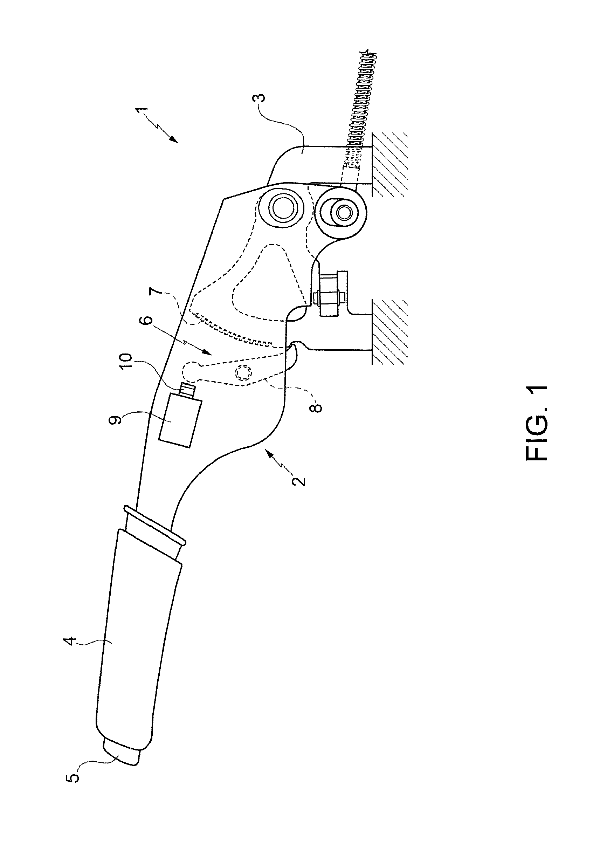

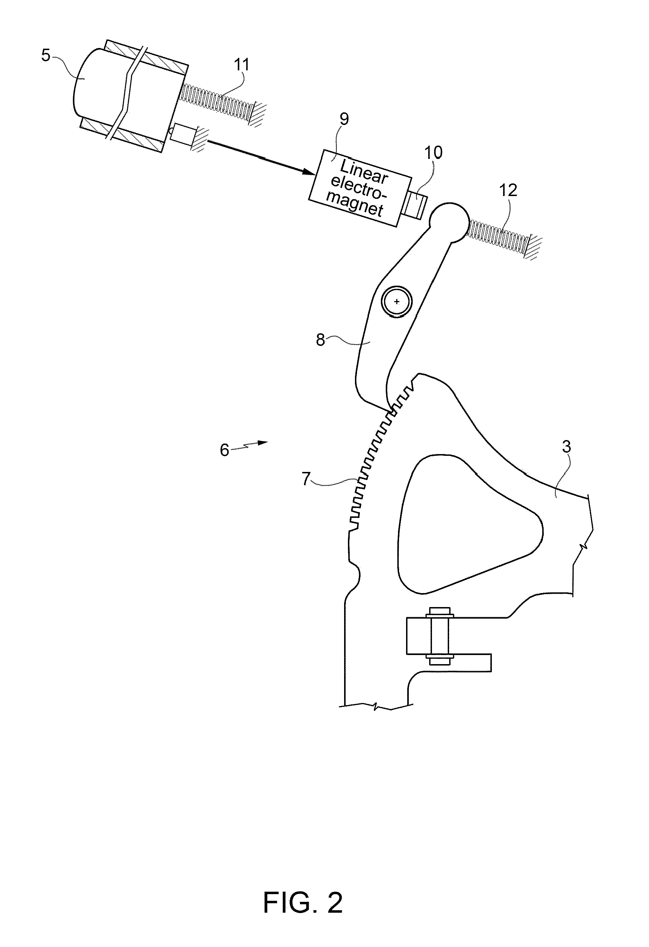

For a better understanding of the present invention, some preferred embodiments, provided by way of non-limitative example, will now be described with reference to the accompanying drawings (not to scale), where Figures 1 and 2 schematically show a hand-operable device for operating the parking brake of a motor vehicle according to a preferred embodiment of the present invention.

### DETAILED DESCRIPTION OF PREFERRED EMBODIMENTS OF THE INVENTION

The following description is provided to enable an expert in the field to embody and use the invention. Various modifications to the embodiments shown will be immediately obvious to experts and the generic principles described herein could be applied to other embodiments and applications without departing from the scope of protection of the present invention.

Accordingly, the present invention should not be considered as limited to just the embodiments described and illustrated herein, but is to be accorded the widest scope consistent with the principles and features disclosed herein and defined in the appended claims.

According to the present invention, in order to obviate the previously described constraint imposed on the shape of the hand brake lever by the use of control rods and mechanical linkages for transmission of the release command from the control button to the ratchet mechanism, the use of an electric actuator that directly controls the ratchet mechanism is proposed.

In particular, the present invention concerns a hand-operable device for controlling a parking brake of a motor vehicle, which device includes:
- a hand-operable lever (or hand brake lever) for controlling the parking brake;
- a ratchet mechanism coupled to the lever and configured to constrain movement of said lever; and
- an electric actuator configured to cause disengagement of the ratchet mechanism, thereby removing the constraint imposed by said ratchet mechanism on the movement of the lever.

The lever conveniently carries finger-operable control means (for example, preferably implemented in the form of a push-button) that are connected to the electric actuator for controlling the latter; said electric actuator is configured to cause disengagement of the ratchet mechanism in response to operation of the control means.

The ratchet mechanism conveniently comprises a sector gear and a catch configured to engage said sector gear, thereby constraining the movement of the lever; furthermore, the electric actuator is configured to cause disengagement of the catch from the sector gear, thereby removing the constraint imposed by the ratchet mechanism on the movement of the lever.

More conveniently, the catch is coupled to means configured to cause said catch to engage the sector gear, said means being, for example, preferably provided in the form of a spring. Alternatively, the electric actuator is also configured to cause said catch to engage the sector gear when the control means are not operated.

The electric actuator is conveniently a linear or rotary actuator.

In general, the electric actuator can conveniently be an electromagnetic actuator, an electromechanical actuator, a piezoelectric actuator, a magnetostrictive actuator, a semiconductor actuator, or a MEMS (Micro Electro-Mechanical Systems) actuator. In particular, the electric actuator is preferably a linear or rotary electromagnetic actuator, i.e. is preferably implemented by means of a linear or rotary electromagnet.

For a better understanding of the present invention, Figure 1 shows a schematic cross-sectional view of a hand-operable device (indicated as a whole by reference numeral 1) for controlling a parking brake of a motor vehicle according to a first preferred embodiment of the present invention. In addition, Figure 2 shows some components of the device 1 in greater detail in order to make the functioning of this device more intuitive and consequently easier to understand.

In particular, as shown in Figures 1 and 2, the device 1 comprises:
- a hand brake lever 2 that
   - is rotatably mounted, in particular pivoted at a first end, on a support bracket 3 fastened, or anchored, to the body of the motor vehicle (for example, on the interior floor of the motor vehicle) in such a way that said lever 2 can rotate about a respective axis between a rest position in which the parking brake is not operated and an active position in which the parking brake is operated, and
   - comprises, at a second end, a handgrip 4 that carries finger-operable control means conveniently provided in the form of a control button 5 (in particular, said control button 5 being located in a frontal area of the handgrip 4);
- a ratchet mechanism 6 that includes
   - a sector gear 7 made on the support bracket 3, and
   - a catch 8 that is rotatably mounted, or pivoted, on the hand brake lever 2 so as be rotatable about a respective axis parallel to the axis of rotation of the hand brake lever 2, and which comprises, at a first end, a pawl configured to engage the sector gear 7, thereby constraining the direction of rotation of the hand brake lever 2; and
- a linear actuator 9, conveniently a linear electromagnetic actuator (for example, implemented by means of a linear electromagnet), which
   - is located at a second end of the catch 8,
   - is connected to the control button 5 to be operated by the latter,
   - comprises an output shaft 10, and
   - is configured to move the output shaft 10 outwards against the second end of the catch 8 in response to operation of the control button 5, thereby causing a clockwise rotation of said catch 8 and, in consequence, the disengagement of the pawl from the sector gear 7.

The control button 5 is conveniently operated by the pressure exerted by a finger and is coupled to a first spring 11 configured to return/keep said control button 5, when the latter is not (no longer) pressed, in the position that does not cause operation of the linear actuator 9.

Therefore, in use, when the control button 5 is operated (in particular, when pressed), the output shaft 10 of the linear actuator 9 presses against the second end of the catch 8 and, in consequence, rotates the catch 8 clockwise, causing disengagement of the pawl from the sector gear 7. In this way, the hand brake lever 2 is allowed to rotate both from the active position to the rest position and from the rest position to the active position.

Furthermore, in order to cause/ensure that the catch 8 engages the sector gear 7 when the control button 5 is not operated (in particular, when not pressed), it can be convenient to use a second spring 12, that is coupled to the second end of the catch 8 and is configured to:
- when the linear actuator 9 ceases to be operated by the control button 5 and, in consequence, the output shaft 10 is moved backwards, thereby no longer pushing against the second end of the catch 8, exert a force against said second end of the catch 8 sufficient to cause an anticlockwise rotation of said catch 8 and, in particular, sufficient to cause the pawl to engage the sector gear 7; and,
- when the linear actuator 9 is not operated by the control button 5, exert a force against the second end of the catch 8 sufficient to ensure that the pawl continues to engage the sector gear 7.

Conveniently, in an alternative embodiment (not shown in Figures 1 and 2), the linear actuator 9 and the second spring 12 could be arranged in series and be coaxial.

As an alternative to using the second spring 12, the same linear actuator 9 could also be conveniently used to cause/ensure engagement of the catch 8 with the sector gear 7 when the control button 5 is not operated (in particular, when not pressed). In fact, the second end of the catch 8 could be conveniently fastened to the output shaft 10 so that:
- when the linear actuator 9 ceases to be operated by the control button 5, the output shaft 10 is retracted backwards so as to rotate the catch 8 anticlockwise and, in particular, so as to cause the pawl to engage the sector gear 7; and,
- when the linear actuator 9 is not operated by the control button 5, the pawl continues to engage the sector gear 7.

Thus, by using the second spring 12 or the same linear actuator 9, in use, when the control button 5 is not operated (in particular, when not pressed), the hand brake lever 2 is constrained by the ratchet mechanism 6 to rotate only and exclusively from the rest position to the active position.

A second preferred embodiment of the present invention (an alternative to the first one previously described and illustrated in Figures 1 and 2) provides for the use of a rotary actuator, conveniently a rotary electromagnetic actuator (for example, implemented by means of a rotary electromagnet), instead of the linear actuator 9. In this case, the rotary actuator is coupled to the catch 8, comprises a rotary pin (or rotor) rotationally integral with said catch 8, and is configured to rotate the rotary pin clockwise in response to operation of the control button 5, thereby also causing a clockwise rotation of the catch 8 and, in consequence, the disengagement of the pawl from the sector gear 7.

Also in said second preferred embodiment of the present invention, the second spring 12 or the same rotary actuator can be used in order to cause/ensure engagement of the catch 8 with the sector gear 7 when the control button 5 is not operated (in particular, when not pressed).

From the foregoing description, the advantages of the present invention are immediately evident.

In particular, it is important to stress that due to the use of an electric actuator for releasing the ratchet mechanism, the present invention avoids the use of mechanical control components, in particular of control rods and mechanical linkages, thereby freeing the structure/shape of the hand brake lever from constraints imposed by the operation of these mechanical control components. These freer structures/shapes can be advantageously produced in plastic from a simple mould, without inserts or carriages for creating compartments used for moving the control mechanisms, providing only the insert moulding of a core that holds the locking and electrical connections between the control button and the external cabling. This all results in a reduction in weight and also in cost, as the lever is ready for use straight out of the mould. In other words, the use of an electric actuator for releasing the ratchet mechanism enables reducing the cost of the hand brake lever because, apart from eliminating the mechanical components of release command transmission (and therefore the related manufacturing costs), the assembly costs of these control mechanisms are also eliminated.

Therefore, the present invention overcomes the technical problems related to the constraint imposed on the shape of the hand brake lever by the use of control rods and mechanical linkages for transmission of the release command from the control button to the ratchet mechanism, thereby enabling all the above-stated technical advantages to be achieved. With regard to this, it is important to note that, contrary to the present invention, the automotive parking brake according to DE 32 10 402 A1 is affected by the above-stated technical problems because, according to DE 32 10 402 A1, the release of the ratchet mechanism (for deactivation of the parking brake) is performed mechanically by using control rods and mechanical linkages.

Furthermore, it is also important to note how the architecture of the system according to DE 10 2006 016 497 A1 is completely different from that of the present invention. In fact, the system according to DE 10 2006 016 497 A1 does not use any hand brake lever and includes control means and a ratchet mechanism arranged in positions distant from each other, while the present invention uses a hand brake lever 2 to which the ratchet mechanism 6 is coupled and in which the electric actuator 9 is housed.

Finally, it is clear that various modifications can be applied to the present invention without departing from the scope of the invention as defined in the appended claims.

## Claims

1. A hand-operable device (1) for controlling a parking brake of a motor vehicle, said device (1) including:
• a lever (2) that is hand operable to control the parking brake and carries finger-operable control means (5); and
• a ratchet mechanism (6) that is coupled to the lever (2) and configured to constrain movement of said lever (2), said ratchet mechanism (6) comprising a sector gear (7) and a catch (8) configured to engage said sector gear (7), thereby constraining the movement of the lever (2);
the device (1) being **characterized by** further including an electric actuator (9) that is:
• connected to the control means (5) to be controlled by the latter; and
• configured to cause, in response to operation of the control means (5), disengagement of the catch (8) from the sector gear (7), thereby removing the constraint imposed by the ratchet mechanism (6) on the movement of the lever (2).

2. The device of claim 1, wherein the catch (8) is coupled to means (12) configured to cause said catch (8) to engage the sector gear (7).

3. The device of claim 1, wherein the electric actuator (9) is further configured to cause said catch (8) to engage the sector gear (7) when the control means (5) are not operated.

4. The device according to any preceding claim, wherein the electric actuator (9) is a linear or rotary actuator.

5. The device according to any preceding claim, wherein the electric actuator (9) is one of the following actuators: an electromagnetic actuator, an electromechanical actuator, a piezoelectric actuator, a magnetostrictive actuator, a semiconductor actuator, or a MEMS actuator.

6. The device according to any of claims 1-3, wherein the electric actuator (9) is a linear or rotary electromagnetic actuator.

7. A motor vehicle comprising a parking brake and the device (1) claimed in any preceding claim, wherein said device (1) is connected to the parking brake to control the latter.
